# EUROPEAN PATENT APPLICATION

(11) **EP 2 543 988 A1**
(43) Date of publication of application: **09.01.2013**
(21) Application number: 12175251.3
(22) Date of filing: 06.07.2012
(51) Int. Cl.: G01N 21/25, G01J 3/42, G01N 21/77, G01N 33/487, G01N 33/50, G01N 33/72, G01N 21/27

(54) **Spectrophotometer, spectrophotometer tool, spectrophotometric method, and program**

(30) Priority: 06.07.2011 JP 2011150436
(71) Applicant: ARKRAY, Inc., Minami-ku Kyoto 601-8045 (JP)
(72) Inventor: Okubo, Akio, Kamigyo-ku Kyoto 6020008 (JP); Nakamura, Tsutomu, Kamigyo-ku Kyoto 6020008 (JP)
(74) Representative: Piésold, Alexander James

(57) **Abstract**

A light emitter (11) emits light with a plurality of wavelengths towards a test obj ect (3) held in a spectrophotometer tool (2). A light receiver (13) receives the light passing through the test object (3). A detector (14) detects absorbances of wavelength components from the light received. An optical path length calculator (16) compares, in the absorbances of the wavelength components detected, a wavelength component absorbance of light absorbed by a pigment that absorbs light with a wavelength other than a wavelength of light absorbed by an analyte in the test object (3) and a predetermined value of the wavelength component absorbance to calculate an optical path length. A corrector (17) corrects the wavelength component absorbance detected excluding the wavelength of the light absorbed by the pigment using the optical path length calculated by the calculator (16) to calculate a corrected wavelength component absorbance in a reference optical length.

## Description

The present invention relates to a spectrophotometer, a spectrophotometer tool, a spectrophotometric method, and a program, which are used to analyze the concentration of an analyte in a test object by absorption spectrophotometry.

The wavelength of light absorbed by substances varies among the substances. The absorbance changes according to the concentration of a substance in solution and optical path length. It is known that when sample concentration is low, the absorbance of light passing through the same distance in solution is proportional to the sample concentration (Lambert-Beer law). The Lambert-Beer law is used for quantitative sample analysis by absorption spectrophotometry. Absorption spectrophotometry is a technique for quantitatively analyzing the concentration of an analyte in a sample solution by measuring the magnitude of light absorption by the analyte, namely the absorbance of the analyte when light applied to the sample solution passes therethrough.

Generally, in absorption spectrophotometry, a container holding a sample solution is called a cell. In the measurement of absorbance of transmitted light, a length in which light passes through a sample can be called a cell length. To accurately measure the concentration of a substance by absorption spectrophotometry, it is necessary to accurately determine the length (cell length) in which light passes through the sample.

For example, Unexamined Japanese Patent Application Laid-Open Publication No. H05-018823 has disclosed a technique for performing quantitative analysis by spectrophotometry in which cell length correction is conducted for quantitative analysis using a plurality of cells having different cell lengths. In the spectrophotometric technique described in the Patent Literature, for spectrophotometric analysis using an apparatus performing spectrophotometric measurement at a plurality of predetermined wavelengths, various output variations are measured in advance in each wavelength and regarded as vectors in the dimensional space of the number of wavelengths measured to obtain a subspace orthogonal to all the vectors. Then, regarding a reference cell and a measurement cell, various error variations are removed in advance by measuring a plurality of measurement samples and projecting the data on the subspace. Using the projected data, a correlation between measured values of the reference cell and those of the measurement cell is obtained to corrects changes due to cell length. The corrected values and a calibration curve equation are used to obtain output values. This allows the use of a plurality of cells having different cell lengths.

In the technique of the Unexamined Japanese Patent Application Laid-Open Publication No. H05-018823, upon the cell length correction, many wavelengths (six in the Examples) are used and complicated calculations are performed for the cell length correction.

However, when performing sample component analysis by colorimetry, it is necessary to determine a wavelength in which signal change occurs by reaction. In addition, a wavelength region with the signal change is not so wide. For example, to simultaneously measure the six wavelengths, it might be possible to use a large apparatus such as a spectrophotometer with a halogen lamp or a D2 lamp (deuterium lamp) as a light source. However, a small analytical instrument with LED as a light source would require the incorporation of six or more LEDs having different wavelength characteristics. Thereby, since the number of controllers increases, instrument miniaturization becomes difficult and the system of the instrument becomes complicated.

The present invention has been accomplished in view of the circumstances and is directed to provide a spectrophotometer, a spectrophotometer tool, a spectrophotometric method, and a program, which allows absorbance correction using an optical path length in which light passes through a test object in measurement in each spectrophotometer tool.

A spectrophotometer according to a first aspect of the present invention includes:
a light emitter for emitting light with a plurality of wavelengths towards a test object held in a spectrophotometer tool;
a light receiver for receiving the light with the plurality of wavelengths passing through the test object held in the spectrophotometer tool;
a spectrometer for detecting absorbances of wavelength components from the light with the plurality of wavelengths received by the light receiver;
an optical path length calculator for calculating an optical path length in which the light with the plurality of wavelengths passes through the test object held in the spectrophotometer tool by comparing, in the absorbances of the wavelength components detected by the spectrometer, an absorbance of a wavelength component of light absorbed by a pigment that absorbs light with a wavelength other than a wavelength of light absorbed by an analyte in the test object and a predetermined value of the absorbance of the wavelength component; and
a corrector for correcting the absorbance of the wavelength component detected by the spectrometer excluding the wavelength of the light absorbed by the pigment using the optical path length calculated by the optical path length calculator to calculate a corrected wavelength component absorbance in a reference optical path length.

Preferably, the corrector calculates the corrected wavelength component absorbance by subtracting the wavelength component absorbance of the light absorbed by the pigment from the detected wavelength component absorbance.

Preferably, the analyte and the pigment are any one of the following combinations (a) to(f):
(a) the analyte includes nicotinamide adenine dinucleotide, nicotinamide adenine dinucleotide phosphate, p-nitrophenol, 5-amino-2-nitrobenzoic acid, or phosphomolybdic acid, and the pigment includes malachite green or Brilliant Blue FCF;
(b) the analyte includes biliverdin, and the pigment includes indocyanine green, malachite green, or Brilliant Blue FCF;
(c) the analyte includes a protein-copper ion complex, and the pigment includes indocyanine green;
(d) the analyte includes an o-cresolphthalein complexone-Ca ion complex or an o-cresolphthalein complexone-Mg ion complex, and the pigment includes Brilliant Blue FCF or indocyanine green;
(e) the analyte includes a condensation reaction product of 4-aminoantipyrine with Trinder's agent, and the pigment includes Mordant Blue 29, phloxine B and phloxine BP, or Food Red No. 2; and
(f) the analyte includes albumin-bromocresol green, and the pigment includes indocyanine green or phloxine B.

A spectrophotometer tool according to a second aspect of the present invention is a spectrophotometer tool holding a test object and includes a pigment holding portion, a hollow cavity provided between two planes inside the spectrophotometer tool, and a pathway leading to an inside of the hollow cavity from an outside of the tool, in which a substance forming at least one of the two planes having the hollow cavity therebetween is transparent,
the pigment holding portion holding a predetermined amount of pigment that is soluble in the test object and absorbs light with a wavelength other than a wavelength of light absorbed by an analyte in the test object.

Preferably, the analyte and the pigment are any one of the following combinations (a) to(f):
(a) the analyte includes nicotinamide adenine dinucleotide, nicotinamide adenine dinucleotide phosphate, p-nitrophenol, 5-amino-2-nitrobenzoic acid, or phosphomolybdic acid, and the pigment includes malachite green or Brilliant Blue FCF;
(b) the analyte includes biliverdin, and the pigment includes indocyanine green, malachite green, or Brilliant Blue FCF;
(c) the analyte includes a protein-copper ion complex, and the pigment includes indocyanine green;
(d) the analyte includes an o-cresolphthalein complexone-Ca ion complex or an o-cresolphthalein complexone-Mg ion complex, and the pigment includes Brilliant Blue FCF or indocyanine green;
(e) the analyte includes a condensation reaction product of 4-aminoantipyrine-Tiinder's reagent, and the pigment includes Mordant Blue 29, phloxine B and phloxine BP, or Food Red No. 2; and
(f) the analyte includes albumin-bromocresol green, and the pigment includes indocyanine green or phloxine B.

A spectrophotometric method according to a third aspect of the present invention includes:
a pigment adding step of dissolving, in a test object at a predetermined concentration, a pigment that absorbs light having a wavelength other than a wavelength of light absorbed by an analyte in the test object;
a test-object holding step of holding the test object containing the dissolved pigment in a spectrophotometer tool;
a light receiving step of receiving the light with a plurality of wavelengths passing through the test object held in the spectrophotometer tool after the light with the plurality of wavelengths is applied to the test object held in the spectrophotometer tool;
a spectrometric step of detecting absorbances of wavelength components from the light with the plurality of wavelengths received at the light receiving step;
an optical path length calculating step of calculating an optical path length in which the light with the plurality of wavelengths passes through the test object held in the spectrophotometer tool, by comparing an absorbance of a wavelength component of light absorbed by the pigment in the absorbances of the wavelength components detected by the spectrometric step and a predetermined value of the absorbance of the wavelength component; and
a correcting step of correcting the absorbance of the wavelength component detected by the spectrometric step excluding the wavelength of the light absorbed by the pigment using the optical path length calculated by the optical path length calculator in order to calculate a corrected wavelength component absorbance in a reference optical path length.

Preferably, the correcting step calculates the corrected wavelength component absorbance by subtracting the wavelength component absorbance of the light absorbed by the pigment from the wavelength component absorbance detected at the spectrometric step.

Preferably, the analyte and the pigment are any one of the following combinations (a) to (f):
(a) the analyte includes nicotinamide adenine dinucleotide, nicotinamide adenine dinucleotide phosphate, p-nitrophenol, 5-amino-2-nitrobenzoic acid, or phosphomolybdic acid, and the pigment includes malachite green or Brilliant Blue FCF;
(b) the analyte includes biliverdin, and the pigment includes indocyanine green, malachite green, or Brilliant Blue FCF;
(c) the analyte includes a protein-copper ion complex, and the pigment includes indocyanine green;
(d) the analyte includes an o-cresolphthalein complexone-Ca ion complex or an o-cresolphthalein complexone-Mg ion complex, and the pigment includes Brilliant Blue FCF or indocyanine green;
(e) the analyte includes a condensation reaction product of 4-aminoantipyrine with Trinder's reagent, and the pigment includes Mordant Blue 29, phloxine B and phloxine BP, or Food Red No. 2; and
(f) the analyte includes albumin-bromocresol green, and the pigment includes indocyanine green or phloxine B.

A program according to a fourth aspect of the present invention causes a computer controlling a spectrophotometer performing spectrophotometric measurement of a test object to execute:
a light measurement step of applying light with a plurality of wavelengths to the test object held in a spectrophotometer tool to receive the light with a plurality of wavelengths passing through the test object held in the spectrophotometer tool;
a spectrometric step of detecting an absorbance of a wavelength component from the light with the plurality of wavelengths received at the light measurement step;
an optical path length calculating step of calculating an optical path length in which the light with the plurality of wavelengths passes through the test object held in the spectrophotometer tool by comparing, in the absorbances of the wavelength components detected at the spectrometric step, an absorbance of a wavelength component of light absorbed by a pigment that absorbs light with a wavelength other than a wavelength of light absorbed by an analyte in the test object and a predetermined value of the absorbance of the wavelength component; and
a correcting step of correcting the absorbance of the wavelength component detected at the spectrometric step excluding the wavelength of the light absorbed by the pigment using the optical path length calculated at the optical path length calculating step to calculate a corrected wavelength component absorbance in a reference optical path length.

According to the present invention, when performing measurement in each analysis tool, absorbance can be corrected by the optical path length in which light passes through a test obj ect.

A more complete understanding of this application can be obtained when the following detailed description is considered in conjunction with the following exemplary drawings, in which:
FIG. 1 is a block diagram showing a structural example of a spectrophotometer according to an embodiment of the present invention;
FIG. 2 is a perspective view showing an example of a spectrophotometer tool according to an embodiment of the present invention;
FIG. 3A is a view illustrating an optical path length in spectrophotometry using transmitted light;
FIG. 3B is a view illustrating an optical path length in spectrophotometry using reflected light;
FIG. 4A is a graph showing a relationship between absorbances of an analyte and an added pigment according to an embodiment of the present invention;
FIG. 4B is a graph showing a relationship between the absorbance of an added pigment and an optical path length of the spectrophotometer tool according to an embodiment of the present invention;
FIG. 5 is an exploded perspective view showing the example of the spectrophotometer tool according to the embodiment of the present invention;
FIG. 6 is a cross-sectional view showing the example of the spectrophotometer tool according to the embodiment of the present invention;
FIG. 7 is an exploded perspective view of another example of the spectrophotometer tool according to the embodiment of the present invention;
FIG. 8 is a cross-sectional view showing the other example of the spectrophotometer tool according to the embodiment of the present invention;
FIG. 9 is an exploded perspective view of a modified example of the spectrophotometer tool according to the embodiment of the present invention;
FIG. 10 is a cross-sectional view showing the modified example of the spectrophotometer tool according to the embodiment of the present invention;
FIG. 11A is a flowchart showing an example of operation for a spectrophotometric measurement according to an embodiment of the present invention;
FIG. 11B is a flowchart showing another example of operation for the spectrophotometric measurement according to the embodiment of the present invention;
FIG. 12 is a table showing examples of combinations of analyte and added pigment according to an embodiment of the present invention;
FIG. 13 is a graph showing absorbance of malachite green;
FIG. 14 is a graph showing a relationship between cell length and the amount of change in the absorbance observed in the addition of malachite green;
FIG. 15 is a graph showing absorbance of Brilliant Blue FCF;
FIG. 16 is a graph showing a relationship between cell length and the amount of change in the absorbance observed in the addition of Brilliant Blue FCF;
FIG. 17 is a graph showing an example of a relationship between concentration of a pigment and absorbance thereof;
FIG. 18 is a graph showing an example of a relationship between absorbance of an analyte in a test object and absorbance of a pigment; and
FIG. 19 is a block diagram showing a physical structural example of the spectrophotometer according to the embodiment of the present invention.

Hereinafter, embodiments of the present invention will be described in detail, by way of example only and with reference to the drawings. The same or equivalent parts in the drawings are given the same reference numerals.

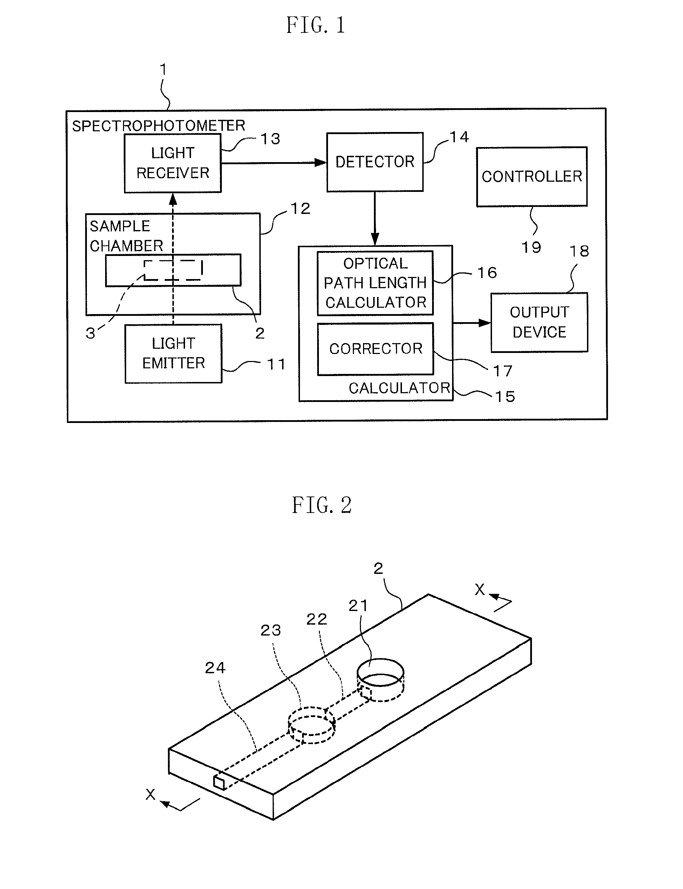

FIG. 1 is a block diagram showing a structural example of a spectrophotometer according to an embodiment of the present invention. A spectrophotometer 1 includes a light emitter 11, a sample chamber 12, a light receiver 13, a detector 14, a calculator 15, an output device 18, and a controller 19. The calculator 15 includes an optical path length calculator 16 and a corrector 17. The sample chamber 12 supports a spectrophotometer tool 2. The spectrophotometer tool 2 holds a test object 3, which is a solution containing an analyte. The part of the spectrophotometry tool 2 holding the test object 3 is transparent, so that light applied from outside passes through the test object 3 to be emitted to the outside thereof

In FIG. 1, for simple illustration, lines to the individual devices from the controller 19 are omitted. The controller 19 controls the individual devices such that the light emitter 11, the light receiver 13, the detector 14, the calculator 15, and the output device 18 operate in cooperation with each other.

In the spectrophotometer 1, light with a plurality of wavelengths is applied to the test object 3 to measure a concentration of an analyte in the test object 3 from a absorbance of each wavelength component of light passing through the test object 3.

The light emitter 11 emits the light with the plurality of wavelengths towards the test object 3 held in the spectrophotometer tool 2. To produce the light with the plurality of wavelengths, for example, light from a light source having a continuous spectrum is separated to be consecutively emitted. To separate the light, for example, an interference filter or prism can be used. Alternatively, by consecutively switching on/off a plurality of light sources with different wavelength characteristics, light with a plurality of wavelengths may be applied.

The light receiver 13 is composed of an optoelectronic device or the like and receives the light with the plurality of wavelengths passing through the test object 3 after being emitted from the light emitter 11 in order to convert the light into an electric signal corresponding to an intensity of the light. In the consecutive emission of light with a plurality of wavelengths, the intensity of light of each wavelength component can be determined according to the emission timing. The light emitter 11 may simultaneously emit light with a plurality of wavelengths, and the light passing through the test object 3 may be separated to be simultaneously received by a plurality of light receiving elements.

FIG. 2 is a perspective view showing an example of the spectrophotometer tool according to an embodiment of the present invention. The spectrophotometer tool 2 includes a recess 21 as a pigment holding portion formed on one of main surfaces thereof and a hollow cavity 23 formed inside the tool 2. The recess 21 and the hollow cavity 23 are connected by a pathway 22. The pathway 22 leads from an outside of the spectrophotometer tool 2 to an inside of the hollow cavity 23. From the hollow cavity 23 is additionally formed an air pathway 24 reaching an end face of the spectrophotometer tool 2. The hollow cavity 23 is disposed between planes parallel to the main surfaces of the spectrophotometer tool 2. The planes of the spectrophotometer tool 2 sandwiching the hollow cavity 23 therebetween are transparent in order to transmit light.

The solution of the test object 3 injected in the recess 21 is held in the hollow cavity 23 through the pathway 22. The air pathway 24 is disposed to introduce the test object 3 injected in the recess 21 into the hollow cavity 23 and also to release air from in the hollow cavity 23. The spectrophotometer tool 2 is supported by the sample chamber 12 such that the hollow cavity 23 is located in a position to which light from the light emitter 11 is applied in the state of holding the test object 3 in the hollow cavity 23. The light applied from the light emitter 11 enters one surface of the spectrophotometer tool 2, then passes through the test object 3 held in the hollow cavity 23, and is output from the other surface thereof.

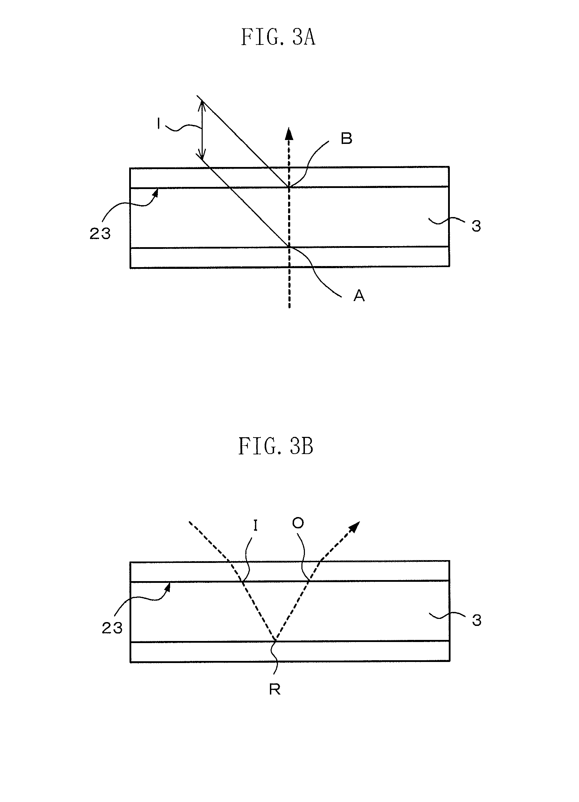

FIG. 3A is a view illustrating an optical path length in a spectrophotometric measurement using transmitted light and corresponds to a cross-sectional view of the part of the hollow cavity 23 of the spectrophotometer tool 2. In FIG. 3A, the test object 3 is located between two transparent flat boards. Light indicated by a dotted-line arrow enters the test object 3 at a point A and passes therethrough at a point B. An optical path length in which the light passes through the test object 3 is a distance 1 from the point A to the point B. The gap between the two transparent flat boards (the distance from the point A to the point B) is called cell length. When light is orthogonally transmitted without being reflected inside the spectrophotometer tool 2, an optical path length of the light passing through the test object 3 is equal to a cell length of the tool. Hereinafter, the optical path length of light passing through the test object 3 is simply referred to as optical path length. Additionally, in the case of transmitted light, the optical path length may also be called cell length.

FIG. 3B is a view illustrating the optical path length in a spectrophotometric measurement using reflected light. Also in FIG. 3B, the test object 3 is disposed between two transparent boards. Light indicated by a dotted-line arrow enters the test object 3 at a point I, then is reflected at a point R, and output at a point O. The point I and the point O may be the same in some cases. The length of a route from the point I to the point O through the point R is an optical path length.

The spectrophotometer 1 may be of transmission type as shown in FIG. 3A or of reflection type as shown in FIG. 3B. In both cases of FIGs. 3A and 3B, it is necessary to determine an accurate optical path length to measure the concentration of the analyte in the test object 3 using absorbance.

In the present embodiment, a pigment that absorbs light with a wavelength other than a wavelength of light absorbed by the analyte in the test object 3 is dissolved in the test object 3 in advance at a predetermined concentration. Then, in wavelength components of light having a plurality of wavelengths passing through the test object 3 containing the dissolved pigment, an absorbance of a wavelength component of light absorbed by the added pigment is used to calculate the optical path length.

To do that, the absorbance of a solution of the added pigment with a predetermined concentration is measured in advance using a plurality of optical path lengths to predetermine an absorbance of a wavelength absorbed by the pigment with the predetermined concentration in a reference optical path length. Next, for light with a plurality of wavelengths passing through the test object 3 containing the dissolved pigment, a wavelength component absorbance of a wavelength absorbed by the pigment is compared with a predetermined value of the wavelength component absorbance to calculate an optical path length.

More specifically, in the spectrophotometer 1 of the present embodiment, the light emitter 11 of FIG. 1 emits light beams with a plurality of wavelengths such that the light beams pass through the same optical path in the test object 3 (except for the influence of refractive index difference due to the wavelengths). In other words, In FIG. 3A or 3B, the light emitter 11 emits the light beams with the plurality of wavelengths such that the light beams enter the test object 3 at the same point and at the same incident angle. Additionally, the light receiver 13 receives the light beams with the plurality of wavelengths passing through the same optical path in the test object 3 (except for the influence of refractive index difference due to the wavelengths).

In the case of the reflected type shown in FIG. 3B (or when light does not vertically enter the surface of the test object 3 even in FIG. 3A), the refractive index of the test object 3 generally changes with wavelength. Thus, to be exact, even if light enters at the same point and at the same incident angle, the optical path length slightly varies depending on wavelength. However, in that case, if the variation of an angle formed by the two planes sandwiching the test object 3 therebetween is small, a ratio between optical path lengths of arbitrary two wavelengths can be considered constant. Therefore, regardless of individual difference of the spectrophotometer tool 2, a correction coefficient can be predetermined. In addition, in FIG. 3B, when light vertically enters the surface of the test object 3 and the incident point I and the exit point O are the same (or unless the incident point A and the exit point B in FIG. 3A change with wavelength), there is no optical path difference, so that correction is unnecessary.

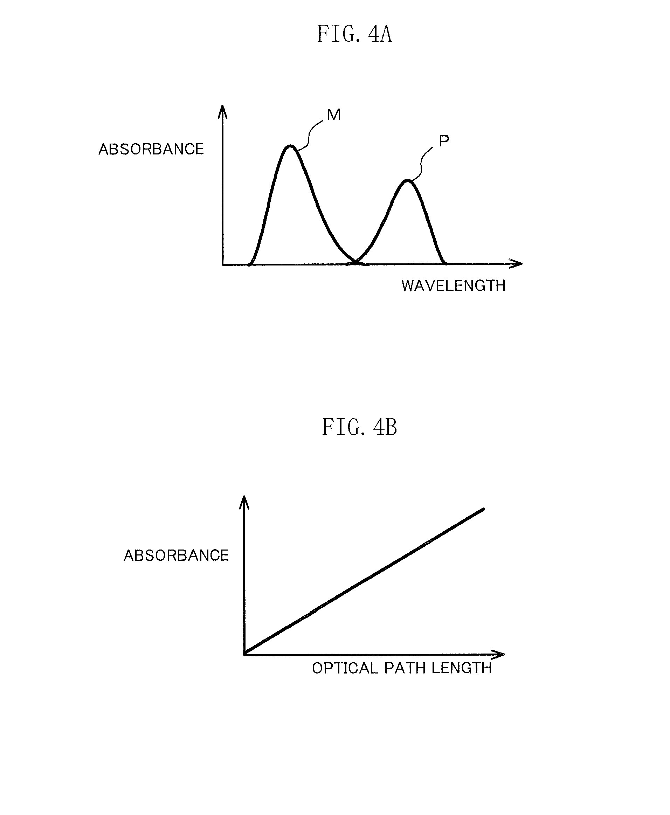

FIG. 4A is a graph showing a relationship between absorption wavelengths of an analyte and an added pigment according to an embodiment of the present invention. In FIG. 4A, the line of absorbance M on the left shows the absorption wavelength of the analyte. If the absorption wavelength of the added pigment is indicated by the line of absorbance P on the right, the absorbance of the pigment is independent from the absorption wavelength of the analyte and not influenced by the concentration of the analyte. Thus, conversely, by selecting a pigment having such a relationship and adding to the test object 3 accurately at a predetermined concentration, the absorbance is proportional to the optical path length, so that the optical path length can be calculated from the absorbance of the absorption wavelength of the pigment.

FIG. 4B is a graph showing a relationship between absorbance of an added pigment and optical path length of the spectrophotometer tool according to an embodiment of the present invention. A pigment having an absorption wavelength not influenced by the concentration of the analyte, in other words, a pigment that absorbs light having a wavelength other than the wavelength of light absorbed by the analyte in the test object 3 is added to the test object 3 at an accurate concentration. Thereby, in light passing through the test object 3, an absorbance of a wavelength component (of at least a part of the light) absorbed by the added pigment is proportional to optical path length, as shown in FIG. 4B. Accordingly, the optical path length can be calculated from the absorbance of the wavelength component.

The detector 14 of FIG. 1 detects a wavelength component absorbance from the light with the plurality of wavelengths received by the light receiver 13. In the present embodiment, the term "wavelength component absorbance" means the absorbance of each wavelength. The wavelength component absorbance is detected as follows. In a state without the test object 3 (or with only a solvent), the light emitter 11 emits light, which then passes through the spectrophotometer tool 2 and is received by the light receiver 13 to measure an intensity (reference spectrum) of an wavelength component received thereby. The reference spectrum shows characteristics of the light emitter 11 and the light receiver 13 and is a spectrum obtained when the absorbance is O. Measurement of the reference spectrum may be, for example regularly performed upon calibration of the spectrophotometer 1, or may be performed each time before measurement of the test object 3.

Next, the test object 3 is held in the spectrophotometer tool 2 to measure the wavelength component (intensity) of light transmitted through the test object 3. A difference obtained by subtracting the wavelength component (intensity) of the light transmitted through the test object 3 from the wavelength component of the reference spectrum for each wavelength is equivalent to the wavelength component absorbance.

The optical path length calculator 16 of the calculator 15 compares, in the wavelength component absorbances detected by the detector 14, the wavelength component absorbance of light absorbed by the pigment that absorbs light with a wavelength other than a wavelength of light absorbed by the analyte in the test object 3 and a predetermined value of the wavelength component absorbance to calculate an optical path length. When the concentration of the added pigment is constant, the absorbance of the pigment is proportional to optical path length, so that the optical path length can be calculated from the absorbance of the pigment. Accordingly, the optical path length can be determined by precision of the concentration of an added pigment.

The corrector 17 corrects the absorbance of a wavelength component other than the wavelength of light absorbed by the added pigment in the wavelength component absorbances detected by the detector 14 using the optical path length calculated by the optical path length calculator 16 to calculate a corrected wavelength component absorbance in the reference optical path length. When the concentration of a light-absorbing substance is constant, the absorbance thereof is proportional to the optical path length. An actual optical path length of the test object 3 is the optical path length calculated by the optical path length calculator 16. Thus, by calculating a proportion between the actual optical path length (the optical path length calculated by the optical path length calculator 16) and the wavelength component absorbance detected by the detector 14, the corrected wavelength component absorbance in the reference optical path length can be obtained.

The corrector 17 can also calculate a corrected wavelength component absorbance by subtracting the wavelength component absorbance of light absorbed by the added pigment from the detected wavelength components. In that case, even when a part of the absorption wavelength of the added pigment is within a band of an absorption wavelength of the analyte, the corrector 17 can calculate a corrected wavelength component absorbance of the analyte.

The controller 19 shown in FIG. 1 controls such that the light emitter 11 and the light receiver 13 perform emission and reception of a plurality of light beams in cooperation with each other. The control 19 also controls the detector 14 and the calculator 15 such that the optical path length calculation and wavelength component correction are executed based on the absorbance of pigment. The output device 18 outputs the corrected wavelength component absorbance to an analyzer (not shown) or the like to analyze the analyte. For example, the analyzer determines a concentration of the analyte from the corrected wavelength component absorbance, using a relationship between the previously-measured absorbance, in the reference optical path length, of the wavelength of light absorbed by the analyte and the concentration of the analyte.

In the present embodiment, light of a wavelength absorbed by pigment, which is used for calculating an optical path length, passes through the same path in the same cell as light for measuring the absorbance of an analyte, so that an optical path length passing through the test object 3, itself, can be obtained. In addition, upon measurement of the test object 3, measurement of optical path length is performed. Thus, in the measurement in each spectrophotometer tool, the absorbance can be corrected by the optical path length in which light passes through the test object 3. In the method of the present embodiment, before spectrophotometric measurement, pigment can be dissolved in the test object 3 at a predetermined concentration. Therefore, the method thereof can be applied to the spectrophotometer tool 2 having any configuration other than that shown in FIG. 2

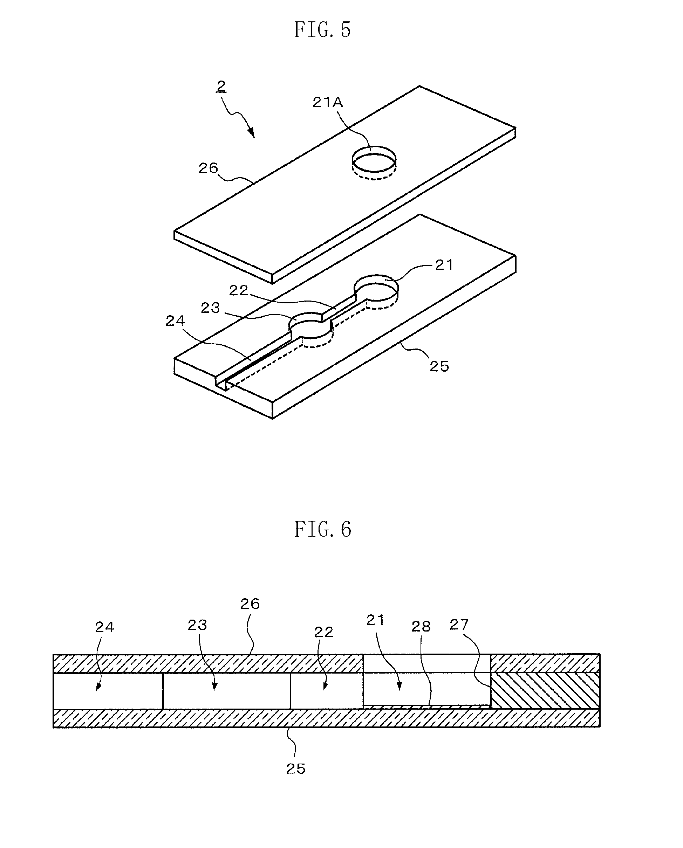

Additionally, the present embodiment uses the spectrophotometer tool 2 in which a pigment is applied in such a manner that the pigment dissolved in the test object 3 has a predetermined concentration. FIG. 5 is an exploded perspective view showing the example of the spectrophotometer tool according to the embodiment of the present invention. FIG. 6 is a cross-sectional view showing the example of the spectrophotometer tool according to the embodiment thereof. FIG. 6 shows a section taken along line X-X of FIG. 2.

The spectrophotometer tool 2 has a structure such that between a transparent substrate 25 and a transparent cover 26 there is interposed a spacer 27 with the recess 21, the pathway 22, the hollow cavity 23, and the air pathway 24 formed therein. At a part of the cover 26 overlapping the recess 21 is formed a hole 21A. In the spectrophotometer tool 2, a pigment layer 28 is formed on an inner surface of the recess 21 as the pigment holding portion. The pigment layer 28 is formed by applying a predetermined amount of a pigment that is soluble in the test object 3 and absorbs light with a wavelength other than the wavelength of light absorbed by the analyte in the test object 3. The pigment to be applied is selected according to the analyte.

The configuration of the pigment holding portion is not restricted to the recess 21 as long as the pigment can be dissolved in the test object 3 at a predetermined concentration. The pigment holding portion may be provided, for example, by arranging a product prepared by mixing a predetermined amount of a pigment in a porous material allowing light transmission through the test object 3 and drying the mixture in the pathway 22 leading to the hollow cavity 23. In this case, without forming the recess 21, the test object 3 may be injected in the pathway 22 with the pigment holding portion arranged therein using a dispensing nozzle or may be suctioned from the air pathway 24 to allow the pigment to be dissolved in the test object 2 at a predetermined concentration and introduced into the hollow cavity 23.

The hollow cavity 23 is covered with the transparent cover 26 to maintain the surface of the test object 3 at a constant level. The hollow cavity 23 is configured to be sandwiched between the two planes. In the case of spectrophotometric measurement using transmitted light, the cover 26 and at least a part of the substrate 25 facing the hollow cavity 23 are transparent. In a spectrophotometric measurement using reflected light, one of the planes sandwiching the hollow cavity 23 therebetween, for example, the cover 26 on the upper side is transparent, and, the other plane, for example, the substrate 25 reflects light. When using reflected light, light may be applied from the substrate 25 on the lower side and reflected on the cover 26 on the upper side.

The spectrophotometer tool 2 has a plate-like shape as a whole, in which the rectangular substrate 25 and cover 26 are bonded to each other with the spacer 27 interposed therebetween. The substrate 25 and the cover 26, respectively, are made of, for example, transparent PET, PMMA, PS, glass, or vinylon.

The pigment layer 28 is formed by spottedly applying a pigment-containing solution on the inner surface of the recess 21 and then drying the solution. The pigment-containing solution is prepared by dissolving a pigment in a solvent at a predetermined concentration. The amount of the pigment-containing solution is accurately measured such that the amount of the pigment of the pigment layer 28 is equal to a predetermined amount, and spottedly applied onto the inner surface of the recess 21 to be dried. The pigment layer 28 may include a reagent added to the test object.

When a predetermined amount of the test object 3 is injected (or spottedly applied) in the recess 21 of the spectrophotometer tool 2 thus formed, the pigment applied in the recess 21 is dissolved in the test object 3 to have a predetermined concentration. The test object 3 containing the dissolved pigment is introduced into the hollow cavity 23 through the pathway 22. After that, the spectrophotometer tool 2 is supported in the sample chamber 12 shown in FIG. 1, and spectrophotometric measurement can be performed by the above-described method.

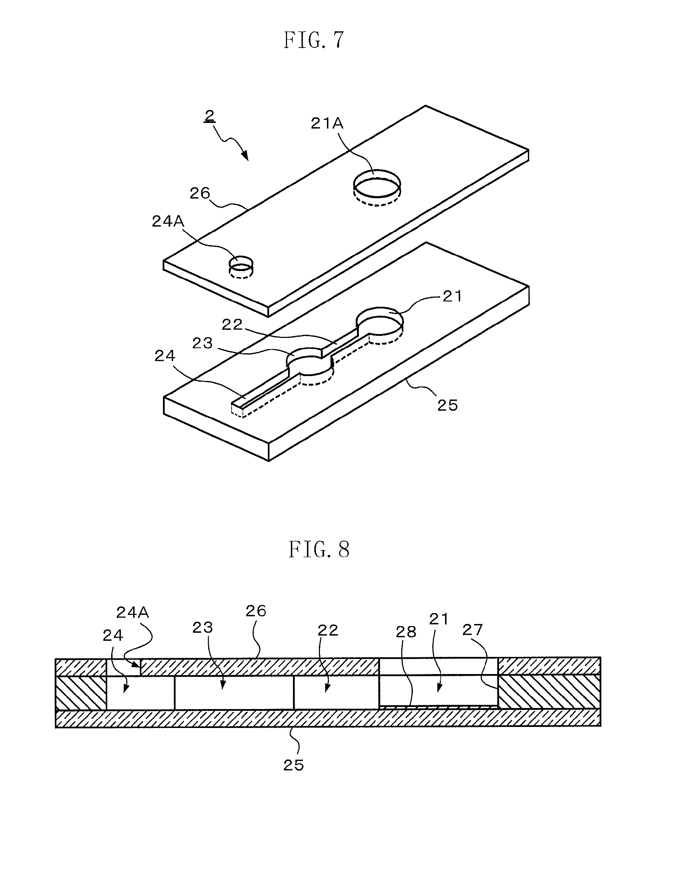

FIG. 7 is an exploded perspective view showing another example of the spectrophotometer tool according to the embodiment of the present invention. FIG. 8 is a cross-sectional view showing the other example of the spectrophotometer tool according to the embodiment thereof. FIG. 8 corresponds to the cross-sectional view of the spectrophotometer tool shown in FIG. 7. In the spectrophotometer tool 2 shown in FIGs. 7 and 8, an opening 24A of the air pathway 24 is formed on the surface with the recess 21 formed thereon.

Use and function of the spectrophotometer tool 2 shown in FIGs. 7 and 8 are the same as those of the spectrophotometer tool of FIG. 5. In the spectrophotometer tool 2 of FIGS. 7 and 8, there is no possibility that the test object leaks out of the air pathway in a state of horizontally supporting the spectrophotometer tool 2.

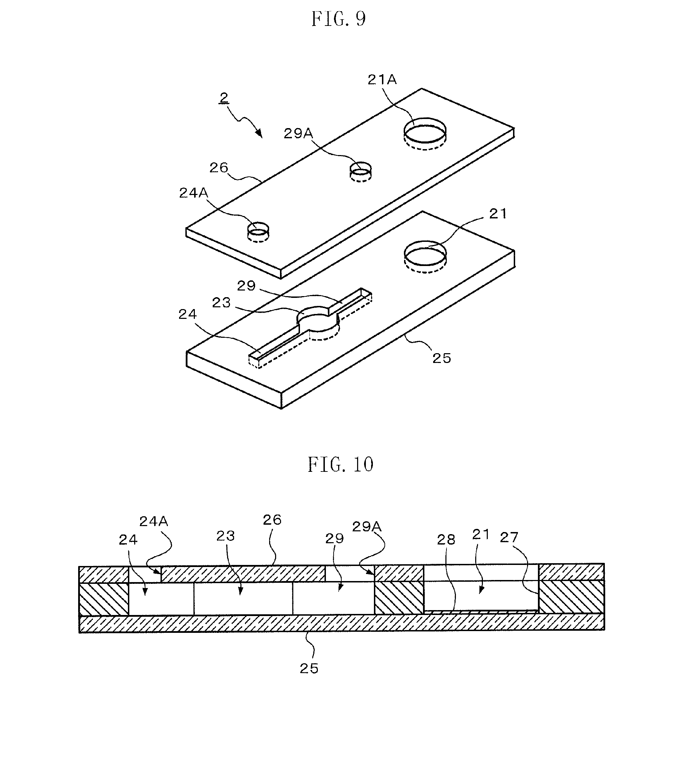

FIG. 9 is an exploded perspective view showing a modified example of the spectrophotometer tool according to the embodiment of the present invention. FIG. 10 is a cross-sectional view showing the modified example of the spectrophotometer tool according to the embodiment thereof. FIG. 10 corresponds to the cross-sectional view of the spectrophotometer tool shown in FIG. 9. In the spectrophotometer tool 2 shown in FIGs. 9 and 10, the recess 21 and the hollow cavity 23 are not connected by the pathway 22. Instead, an inlet 29A is formed in the cover 26. The inlet 29A is connected to the hollow cavity 23 by a pathway 29. The pathway 29 leads from the outside of the spectrophotometer tool 2 to the inside of the hollow cavity 23. In the spectrophotometer tool 2 of the modified example, as in FIG. 7, the opening 24A of the air pathway 24 is formed in the cover 26. Also in the spectrophotometer tool 2 of the modified example, the pigment layer 28 is formed on the inner surface of the recess 21.

In the modified example shown in FIGs. 9 and 10, a predetermined amount of the test object 3 is injected in the recess 21 to dissolve the pigment of the pigment layer 28 in the test object 3. Then, the test object 3 containing the pigment dissolved at a predetermined concentration is transferred from the recess 21 to the inlet 29A. It is unnecessary to accurately measure the amount of the test object 3 that will be transferred from the recess 21 to the inlet 29A as long as the amount thereof is sufficient to fill the hollow cavity 23. The test object 3 injected from the inlet 29A is introduced into the hollow cavity 23 through the pathway 22. Then, the spectrophotometer tool 2 is supported in the sample chamber 12 shown in FIG. 1, and spectrophotometric measurement can be performed by the above-described method.

With the use of the spectrophotometer tool 2 described above, spectrophotometric measurement can be easily performed by the method of the present embodiment only by accurately measuring the amount of the test object 3 to inject in the spectrophotometer tool 2. By preparing the spectrophotometer tool 2 with a pigment applied according to the analyte, analysis for various analytes can be easily performed by absorption spectrophotometry. Hereinafter, a description will be given of operation of the spectrophotometer 1 according to the present embodiment.

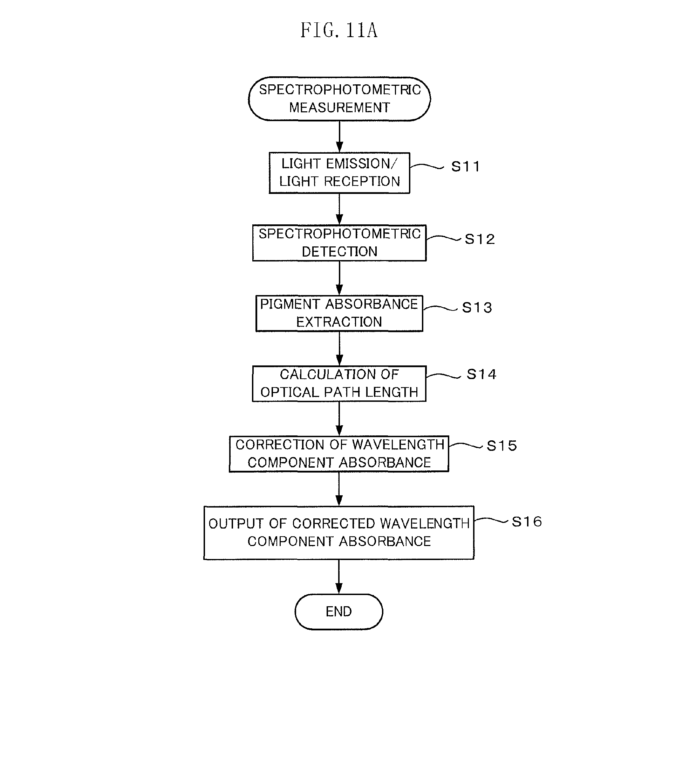

FIG. 11A is a flowchart showing an example of operation of spectrophotometric measurement according to an embodiment of the present invention. Before spectrophotometric measurement, a pigment selected according to the analyte is dissolved in the test object 3 at a predetermined concentration. The spectrophotometer tool 2 holding the test object 3 containing the dissolved pigment is supported in the sample chamber 12 to start spectrophotometric measurement.

The controller 19 confirms, by a signal of a sensor (not shown), that the spectrophotometer tool 2 is appropriately supported in the sample chamber 12 and the chamber is closed to prevent light from the outside from coming in. Then, the controller 10 controls the light emitter 11 in order to apply light with a plurality of wavelengths to the spectrophotometer tool 2 and simultaneously controls the light receiver 13 to receive the light (step S11). The detector 14 detects wavelength component absorbances from the light with the plurality of wavelengths received by the light receiver 13 (step S12).

The optical path length calculator 16 of the calculator 15 extracts an absorbance (wavelength component absorbance) of a predetermined wavelength absorbed by the pigment (step S13) and compares the absorbance and a predetermined value of the wavelength component absorbance to calculate an optical path length (step S14). The corrector 17 corrects, using the optical path length calculated by the optical path length calculator 16, the absorbance of a wavelength component other than the wavelength of light absorbed by the pigment in the wavelength component absorbances detected by the detector 14 to calculate a corrected wavelength component absorbance in the reference optical path length (step S15). The output device 18 outputs the corrected wavelength component absorbance to the outside (step S16). The analyzer receives the corrected wavelength component absorbance and uses, for example, the relationship between the absorbance, in the reference optical path length, of a wavelength of light absorbed by the analyte and the concentration of the analyte to determine a concentration of the analyte from the corrected wavelength component absorbance.

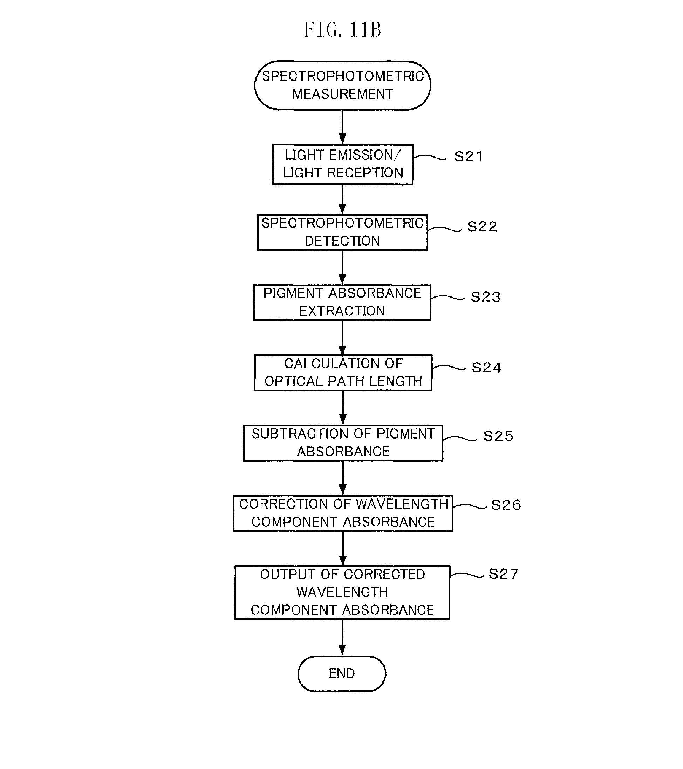

FIG. 11B is a flowchart showing another example of operation of the spectrophotometry according to the embodiment of the present invention. FIG. 11B shows an operation for calculating a corrected wavelength component by subtracting the wavelength component of light absorbed by the added pigment from the detected wavelength component. Operations of steps S21 to S24 of FIG. 11B are the same as those of steps S11 to S14 of FIG. 11A.

After calculating the optical path length by the optical path length calculator 16 (step S24), the corrector 17 subtracts the wavelength component absorbance of light absorbed by the added pigment from the detected wavelength component absorbance (step S25). Then, the corrector 17 corrects the difference of the subtraction using the optical path length calculated by the optical path length calculator 16 to calculate a corrected wavelength component absorbance in the reference optical path length (step S26). As in FIG. 1A, the output device 18 outputs the corrected wavelength component absorbance (step S27).

As described hereinabove, according to the spectrophotometer 1 of the present embodiment, by dissolving a pigment in the test object 3 at a predetermined concentration, absorbance correction can be performed by an optical path length in which light passes through the test object 3, upon measurement in each analysis tool. In addition, with the use of the spectrophotometer tool 2 of the present embodiment, by injecting an accurately measured amount of the test object 3, the pigment can be dissolved in the test object 3 at a predetermined concentration. Hereinafter, a description will be given of specific examples of combinations of analyte and added pigment.

### (Specific Examples)

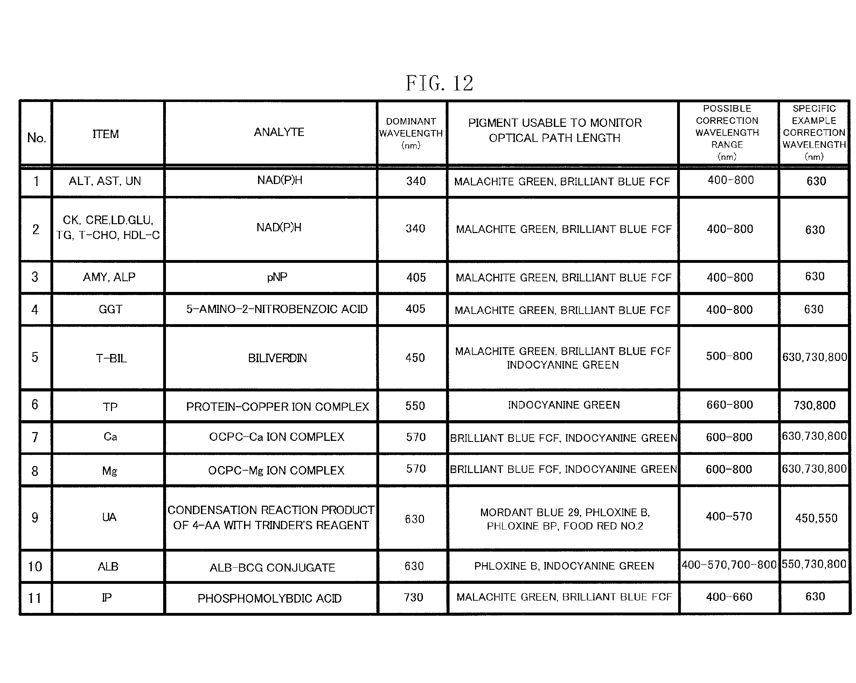

FIG. 12 is a table showing examples of combinations of an analyte and an added pigment according to an embodiment of the present invention. In FIG. 12, Items are mainly those to be analyzed by biochemical tests in clinical examinations. Dominant wavelength is a wavelength of a main component in the wavelength of light absorbed by an analyte to be detected. Pigments that can be used to monitor an optical path length have an absorption wavelength not influenced by a concentration of the analyte. The pigments are examples of those that can be added to the test object 3 to allow the calculation of optical path length. Possible correction wavelength range means that an absorbance for calculating an optical path length can be measured using a pigment having an absorption wavelength within the range. Specific example of correction wavelength means absorption wavelengths of pigments listed in the column of Pigment, which are usable for optical path length monitoring. Depending on the item, either the amount of change in analyte production is measured by reaction or a total amount of the production is measured after reaction. In either case, the present embodiment can be applied.

Regarding the items of No. 1: ALT (alanine transaminase), AST (aspartate aminotransferase), and UN (urea nitrogen), mainly by the reaction of serum with a reagent, analysis is performed to monitor a concentration of a reduced form (NADH or NADPH) of nicotinamide adenine dinucleotide (NAD) or nicotinamide adenine dinucleotide phosphate (NADP) changing with concentrations of the substances of the item. In the Analyte of No. 1, NAD(P)H is the short form of "NADH or NADPH". The dominant wavelength of "NADH or NADPH" is 340 nm.

Similarly, regarding the items of No. 2: CK (creatine kinase), CRE (creatinine), LD (lactate dehydrogenase), GLU (glucose), TG (triglyceride), T-CHO (total cholesterol), and HDL-C (HDL cholesterol), a concentration of the reduced form (NADH or NADPH) of NAD or NADP (dominant wavelength: 340 nm) is analyzed. In the items of No. 1 and No. 2, possible correction wavelength range is 400 to 800 nm. In the case of the items of Nos. 1 and 2, an added pigment can be malachite green or Brilliant Blue FCF having an absorption wavelength of 630 nm.

In the items of No. 3: AMY (amylase) and ALP (alkaline phosphatase), the amount of change in the absorbance of p-nitrophenol (pNP) is measured. The dominant wavelength of pNP is 405 nm. Also in the absorbance measurement of pNP, malachite green or Brilliant Blue FCF can be used.

The item of No. 4: GGT (γ-glutamyltransferase) is quantified by measuring a concentration of 5-amino-2-nitrobenzoic acid. The dominant wavelength of GGT is also 405 nm, and malachite green or Brilliant Blue FCF can also be used.

The item of No. 5: T-BIL (biliverdin), which is an intermediate of a biodegradation product of hem in hemoglobin or the like, is a green tetrapyrrole compound. Biliverdin has a dominant wavelength of 450 nm. As a pigment to be added, there can be used indocyanine green, malachite green, or Brilliant Blue FCF.

Regarding TP (total protein) of No. 6, a concentration of a protein-copper ion complex is measured. The protein-copper ion complex has a dominant wavelength of 550 nm, and indocyanine green can be used an added pigment.

In quantification of Ca (calcium) of No. 7 or Mg (magnesium) of No. 8, measurement is performed to monitor a change in color tone due to a complex reaction product with o-cresolphthalein complexon (OCPC) produced by chelation. In Nos. 7 and 8, the dominant wavelength is 570 nm, and the added pigment can be Brilliant Blue FCF or indocyanine green.

UA (urea acid) of No. 9 is quantified by measuring a concentration of a condensation reaction product of 4-AA with Trinder's reagent (a condensation reaction product of 4-aminoantipyrine with Trinder's reagent) produced using Trinder's reagent. The condensation reaction product of 4-AA with Trinder's reagent has a dominant wavelength of 630 nm, and the possible correction wavelength range is 400 to 570 nm. Thus, as a pigment added for analysis, there can be used Mordant Blue 29, phloxine B, phloxine BP, or Food Red No. 2.

ALB (albumin) of No. 10 is quantified by measuring a concentration of an Alb-BCG (albumin-bromocresol green) conjugate. The dominant wavelength of Alb-BCG is 630 nm, and the possible correction wavelength ranges are 400 to 570 and 700 to 800 m. The analysis of Alb-BCG can use indocyanine green or phloxine B as an added pigment.

Regarding IP (inorganic phosphate) of No. 11, measurement is performed to determine a concentration of phosphomolybdic acid. The dominant wavelength of phosphomolybdic acid is 730 nm, and the possible correction wavelength range is 400 to 660 nm. Malachite green or Brilliant Blue FCF can be used as an added pigment.

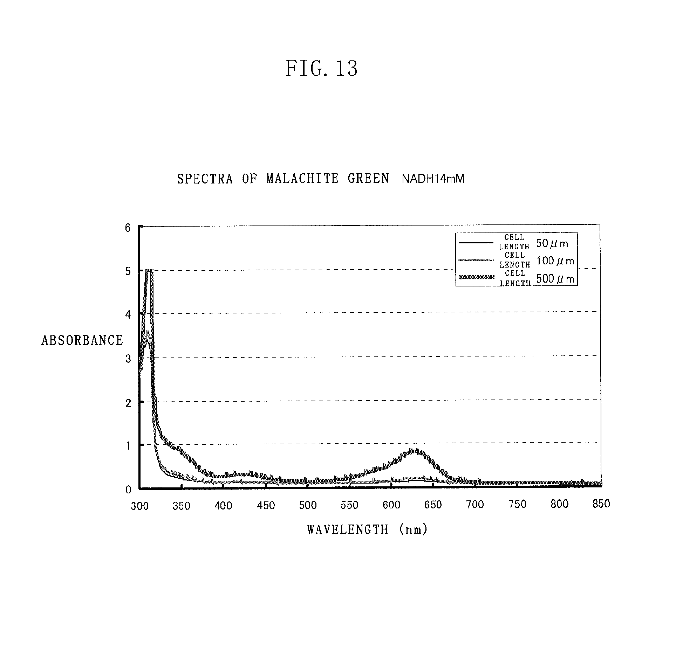

FIG. 13 is a graph showing absorbance of malachite green. In the example of FIG. 13, malachite green was added at a predetermined concentration to the test object 3 including 14 mM of NADH (reduced NAD) to measure the absorbance using spectrophotometer tools 2 with different cell lengths. The example of FIG. 13 corresponds to the items of No. 2 of FIG. 12. The absorption wavelength of NADH is 340 nm, which obviously shows that there is no influence on the absorption wavelength 630 nm of malachite green. The absorbance increases as the cell length becomes greater.

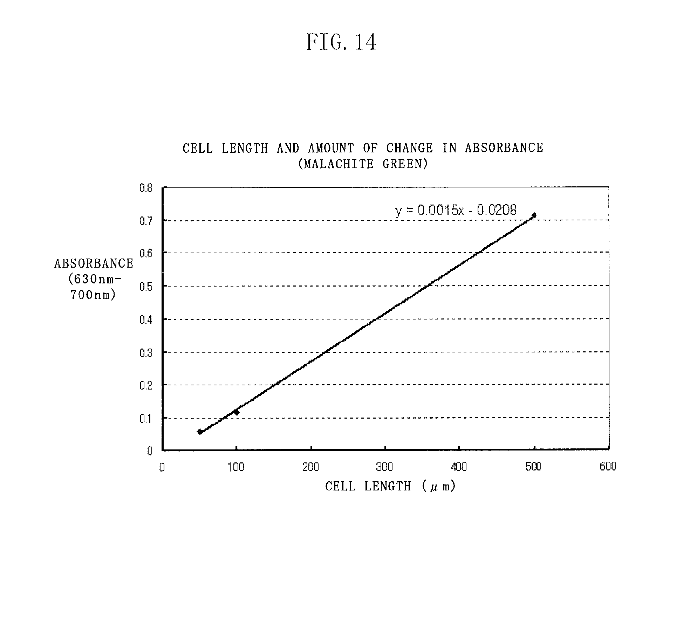

FIG. 14 is a graph showing a relationship between cell length and the amount of change in the absorbance in the addition of malachite green. FIG. 14 shows absorbance of malachite green with respect to cell length plotted based on the results of FIG. 13. Herein, the absorbance of malachite green is plotted in a range of 630 nm and higher (630 to 700 nm). Considering absorption due to bilirubin contained in the test object 3, hemolysis, turbidity, and/or the like, preferably, optical path length is obtained by correction calculation of two wavelengths, namely wavelengths of 630 nm and higher. As shown in FIG. 14, it can be said that even when the test object 3 includes NADH, the absorbance of malachite green is proportional to cell length.

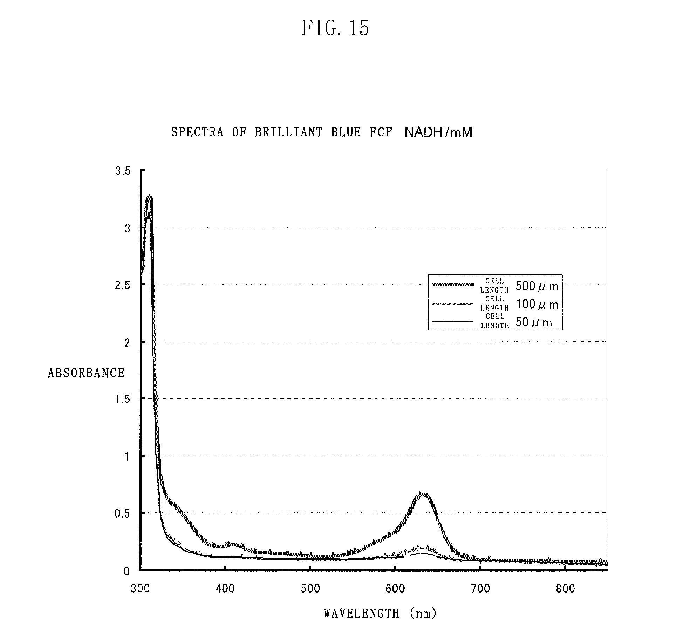

FIG. 15 is a graph showing absorbance of Brilliant Blue FCF. In the example of FIG. 15, Brilliant Blue FCF was added at a predetermined concentration to the test object 3 containing 7 mM of NADH to measure the absorbance using spectrophotometer tools 2 with different cell lengths. The example of FIG. 15 also corresponds to the items of No. 2 of FIG. 12. It can similarly be shown that the absorbance of Brilliant Blue FCF is not influenced by the absorption wavelength of NADH in the wavelength region of 630 nm and higher.

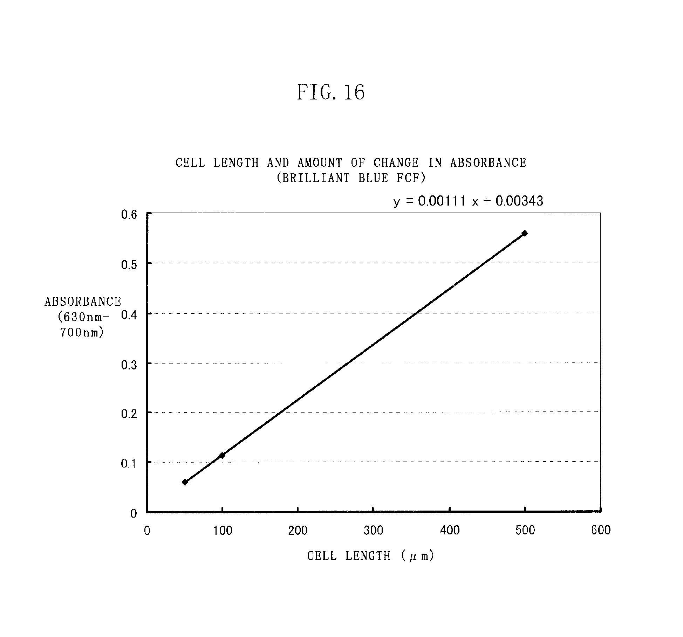

FIG. 16 is a graph showing a relationship between cell length and the amount of change in absorbance in the addition of Brilliant Blue FCF. In FIG. 16, the absorbance of Brilliant Blue FCF with respect to cell length is plotted based on the results of FIG. 15. Herein, similarly, the absorbance of Brilliant Blue FCF is plotted in the range of 630 nm and higher (630 to 700 nm). Also in the case of Brilliant Blue FCF, even when the test object 3 contains NADH, it can be said that the absorbance of Brilliant Blue FCF is proportional to cell length.

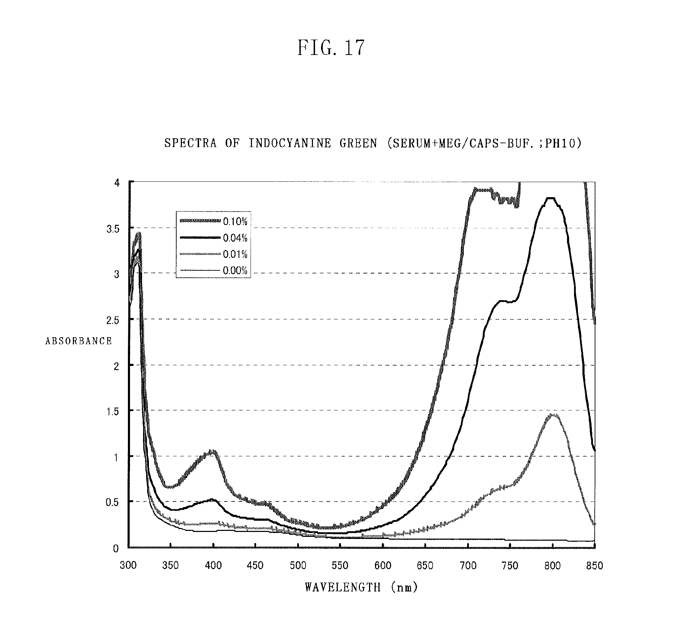

FIG. 17 is a graph showing an example of a relationship between concentration of a pigment and absorbance thereof. FIG. 17 shows changes in absorbance obtained by adding indocyanine green to the test object 3 of serum plus a buffer at each concentration of 0.00%, 0.01 %, 0.04%, and 0.10%. In the example of FIG. 17, using N-methyl-D-glucamin (MEG) and N-cyclohexyl-3-aminopropanesulfonic acid (CAPS) as the buffer, pH was adjusted to 10. As shown in FIG. 17, as the concentration of indocyanine increases, the absorbance also increases.

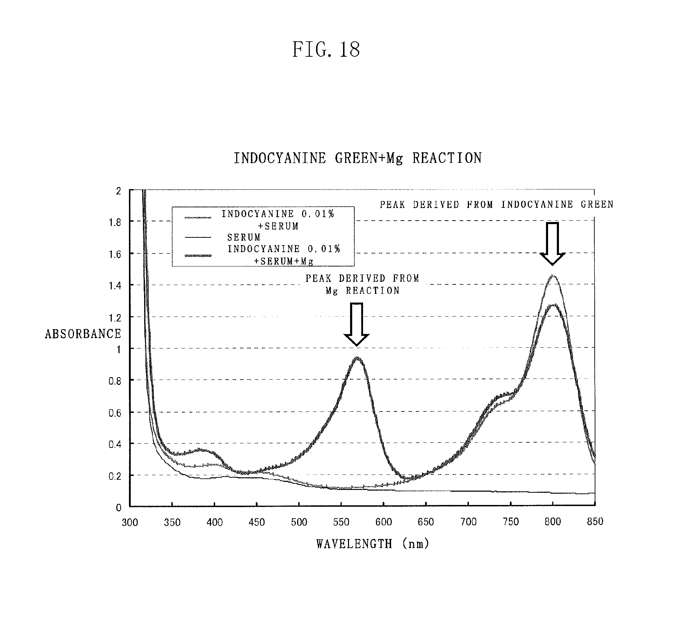

FIG. 18 is a graph showing an example of a relationship between absorbance of an analyte in a test object and absorbance of a pigment. The example of FIG. 18 shows the results of absorbance measurement of the test object 3 obtained in the respective cases of using only serum, adding indocyanine green to serum, and causing reaction of serum by Mg and then adding indocyanine green. The example of FIG. 18 corresponds to the item of Mg of No. 8.

As shown in FIG. 18, it can be seen that serum has no influence to the absorbance of indocyanine green and there is no mutual interference between the absorbance of Mg reaction and the absorbance of indocyanine green. Therefore, by adding indocyanine green at a predetermined concentration, cell length can be calculated from the absorbance of indocyanine green. Additionally, without being influenced by indocyanine green, an absorbance of Mg reaction (an OCPC-Mg ion complex) can be measured. Then, using the cell length calculated from the absorbance of indocyanine green, the absorbance value of the Mg reaction can be corrected to a reference cell length to accurately analyze the concentration of the Mg reaction.

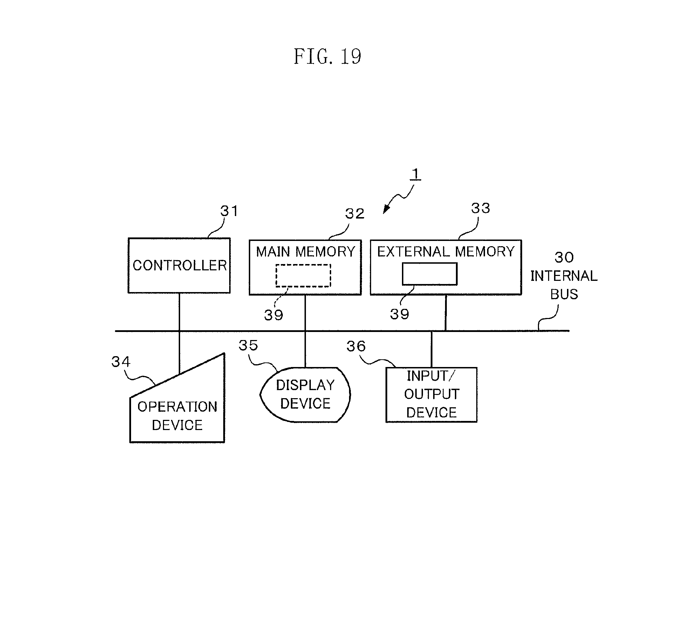

FIG. 19 is a block diagram showing a physical structural example of the spectrophotometer according to the embodiment of the present invention. As shown in FIG. 19, the spectrophotometer 1 includes a controller 31, a main memory 32, an external memory 33, an operation device 34, a display 35, and an input/output device 36. All of the main memory 32, the external memory 33, the operation device 34, the display 35, and the input/output device 36 are connected to the controller 31 via an internal bus 30.

The controller 31 is composed of a central processing unit (CPU) and the like and executes processing for the spectrophotometric measurement described above according to a control program 39 stored in the external memory 33.

The main memory 32 is composed of a random-access-memory (RAM) and the like. The control program 39 stored in the external memory 33 is loaded into the main memory 32, which is used as a work area for the controller 31.

The external memory 33 is composed of a nonvolatile memory, such as flash memory, hard disk, digital versatile disc-random access memory (DVD-RAM), or digital versatile disc rewritable (DVD-RW). The external memory 33 pre-stores the control program 29 for causing the controller 31 to execute the above-described processing. In addition, according to instruction of the controller 31, the external memory 33 supplies data stored in the control program 29 to the controller 31 and stores data supplied from the controller 31.

The operation device 34 is composed of a keyboard with a pointing device, such as a mouse or a touch panel, and the like, and an interface device connecting the keyboard with the pointing device and the like to the internal bus 30. Input operation relating to analytes and pigments to be added is received via the operation device 34.

The display device 35 is composed of a liquid crystal display (LCD) or an organic EL display, a speaker, and the like and displays data calculated regarding spectrophotometric measurement, such as cell lengths, a corrected absorbance of an analyte, and a concentration of the analyte.

The input/output device 36 is composed of a serial interface or a parallel interface. The input/output device 36 is connected to the light emitter 11 and the light receiver 13. In addition, a sensor for detecting the spectrophotometer tool 2 placed in the sample chamber 12, a sensor for detecting the closing of the sample chamber 12, and the like are connected to the input/output device 36. The controller 31 sends a command to the light emitter 11 and the light receiver 13 via the input/output device 36 and receives a signal from the light receiver 13.

Regarding processings by the detector 14, the calculator 15, the output device 18, the controller 19, and the like in the spectrophotometer 1, the control program 39 uses the controller 31, the main memory 32, the external memory 33, the operation device 34, the display device 35, the input/output device 36, a transmitter/receiver 37, and the like as resources to perform processing, whereby the processings thereby are executed.

In addition, the hardware structure and flowcharts described above are merely examples and thus can be arbitrarily changed and corrected.

A central section for executing control processings, which includes the controller 31, the main memory 32, the external memory 33, the operation device 34, and the internal bus 30, can be formed by using not an exclusive system but a general computer system. For example, a computer program for executing the above-described operation may be stored in a computer readable memory medium (such as flexible disc, CD-ROM, or DVD-ROM) to be distributed. Then, the computer program may be installed in a computer to form the spectrophotometer 1 executing the above-described processings. Alternatively, the computer program may be prestored in a memory of a server on a communication network such as the Internet and, for example, may be downloaded by a general computer system to form the spectrophotometer 1.

In addition, when function of the spectrophotometer 1 is executed by role-sharing of an operating system (OS) and an application program or cooperation therebetween, only the application program may be stored in a memory medium or memory.

Furthermore, it is also possible to superimpose the computer program on a carrier wave to distribute via a communication network. For example, the computer program may be posted on a bulletin board system (BBS) on the communication network to distribute the computer program via the network. Then, the spectrophotometer 1 may be formed such that the above-described processings can be executed by booting the computer program to execute as in other application programs under control of the OS.

The present invention is not restricted at all to the above-described embodiments and specific examples. The invention encompasses various modifications and changes without departing from the scope of the claims and within a range where those skilled in the art can easily conceive the invention.

Having described and illustrated the principles of this application by reference to one (or more) preferred embodiment(s), it should be apparent that the preferred embodiment(s) may be modified in arrangement and detail without departing from the principles disclosed herein and that it is intended that the application be construed as including all such modifications and variations insofar as they come within the scope of the subject matter disclosed herein.

## Claims

1. A spectrophotometer (1) comprising:
a light emitter ( 11 ) for emitting light with a plurality of wavelengths towards a test obj ect (3) which in use is to be held in a spectrophotometer tool (2);
a light receiver (13) for receiving the light with the plurality of wavelengths passing through the test object (3) held in the spectrophotometer tool (2);
a spectrometer for detecting absorbances of wavelength components from the light with the plurality of wavelengths received by the light receiver (13);
an optical path length calculator (16) for calculating an optical path length in which the light with the plurality of wavelengths passes through the test object (3) held in the spectrophotometer tool (2) by comparing, in the absorbances of the wavelength components detected by the spectrometer, an absorbance of a wavelength component of light absorbed by a pigment that absorbs light with a wavelength other than a wavelength of light absorbed by an analyte in the test object (3) and a predetermined value of the absorbance of the wavelength component; and
a corrector (17) for correcting the absorbance of the wavelength component detected by the spectrometer excluding the wavelength of the light absorbed by the pigment using the optical path length calculated by the optical path length calculator (16) to calculate a corrected wavelength component absorbance in a reference optical path length.

2. A spectrophotometer (1) according to claim 1, wherein the corrector (17) calculates the corrected wavelength component absorbance by subtracting the wavelength component absorbance of the light absorbed by the pigment from the detected wavelength component absorbance.

3. A spectrophotometer (1) according to claim 1 or 2, wherein the analyte and the pigment are any one of the following combinations (a) to (f):
(a) the analyte includes nicotinamide adenine dinucleotide, nicotinamide adenine dinucleotide phosphate, p-nitrophenol, 5-amino-2-nitrobenzoic acid, or phosphomolybdic acid, and the pigment includes malachite green or Brilliant Blue FCF;
(b) the analyte includes biliverdin, and the pigment includes indocyanine green, malachite green, or Brilliant Blue FCF;
(c) the analyte includes a protein-copper ion complex, and the pigment includes indocyanine green;
(d) the analyte includes an o-cresolphthalein complexone-Ca ion complex or an o-cresolphthalein complexone-Mg ion complex, and the pigment includes Brilliant Blue FCF or indocyanine green;
(e) the analyte includes a condensation reaction product of 4-aminoantipyrine with Trinder's agent, and the pigment includes Mordant Blue 29, phloxine B and phloxine BP, or Food Red No. 2; and
(f) the analyte includes albumin-bromocresol green, and the pigment includes indocyanine green or phloxine B.

4. A spectrophotometer (1) according to any preceding claim, wherein the spectrophotometer tool (2) for holding a test object (3) comprises:
a pigment holding portion, a hollow cavity (23) provided between two planes inside the spectrophotometer tool, and a pathway (22) leading to an inside of the hollow cavity (23) from an outside of the spectrophotometer tool, in which a substance forming at least one of the two planes having the hollow cavity (23) therebetween is transparent,
the pigment holding portion holding a predetermined amount of pigment that is soluble in the test object (3) and absorbs light with a wavelength other than a wavelength of light absorbed by an analyte in the test object (3).

5. A spectrophotometric method comprising:
a pigment adding step of dissolving, in a test object (3) at a predetermined concentration, a pigment that absorbs light having a wavelength other than a wavelength of light absorbed by an analyte in the test object (3);
a test-object holding step of holding the test object (3) containing the dissolved pigment in a spectrophotometer tool (2);
a light receiving step of receiving the light with a plurality of wavelengths passing through the test object (3) held in the spectrophotometer tool (2) after the light with the plurality of wavelengths is applied to the test object (3) held in the spectrophotometer tool (2);
a spectrometric step of detecting absorbances of wavelength components from the light with the plurality of wavelengths received at the light receiving step;
an optical path length calculating step of calculating an optical path length in which the light with the plurality of wavelengths passes through the test object (3) held in the spectrophotometer tool (2) by comparing an absorbance of a wavelength component of light absorbed by the pigment in the absorbances of the wavelength components detected by the spectrometric step and a predetermined value of the absorbance of the wavelength component; and
a correcting step of correcting the absorbance of the wavelength component detected by the spectrometric step excluding the wavelength of the light absorbed by the pigment using the optical path length calculated by the optical path length calculator (16) to calculate a corrected wavelength component absorbance in a reference optical path length.

6. A spectrophotometric method according to claim 5, wherein the correcting step calculates the corrected wavelength component absorbance by subtracting the wavelength component absorbance of the light absorbed by the pigment from the wavelength component absorbance detected at the spectrometric step.

7. A spectrophotometric method according to claim 5 or 6, wherein the analyte and the pigment are any one of the following combinations (a) to (f):
(a) the analyte includes nicotinamide adenine dinucleotide, nicotinamide adenine dinucleotide phosphate, p-nitrophenol, 5-amino-2-nitrobenzoic acid, or phosphomolybdic acid, and the pigment includes malachite green or Brilliant Blue FCF;
(b) the analyte includes biliverdin, and the pigment includes indocyanine green, malachite green, or Brilliant Blue FCF;
(c) the analyte includes a protein-copper ion complex, and the pigment includes indocyanine green;
(d) the analyte includes an o-cresolphthalein complexone-Ca ion complex or an o-cresolphthalein complexone-Mg ion complex, and the pigment includes Brilliant Blue FCF or indocyanine green;
(e) the analyte includes a condensation reaction product of 4-aminoantipyrine with Trinder's reagent, and the pigment includes Mordant Blue 29, phloxine B and phloxine BP, or Food Red No. 2; and
(f) the analyte includes albumin-bromocresol green, and the pigment includes indocyanine green or phloxine B.

8. A program for causing a computer controlling a spectrophotometer (1) performing spectrophotometric measurement of a test object (3) to execute:
a light measurement step of applying light with a plurality of wavelengths to the test object (3) held in a spectrophotometer tool (2) to receive the light with the plurality of wavelengths passing through the test object (3) held in the spectrophotometer tool (2);
a spectrometric step of detecting absorbances of wavelength components from the light with the plurality of wavelengths received at the light measurement step;
an optical path length calculating step of calculating an optical path length in which the light with the plurality of wavelengths passes through the test object (3) held in the spectrophotometer tool (2) by comparing, in the absorbances of the wavelength components detected at the spectrometric step, an absorbance of a wavelength component of light absorbed by a pigment that absorbs light with a wavelength other than a wavelength of light absorbed by an analyte in the test object (3) and a predetermined value of the absorbance of the wavelength component; and
a correcting step of correcting the absorbance of the wavelength component detected at the spectrometric step excluding the wavelength of the light absorbed by the pigment using the optical path length calculated at the optical path length calculating step to calculate a corrected wavelength component absorbance in a reference optical path length.

9. A spectrophotometer tool for (2) holding a test object (3), said spectrophotometer tool comprising:
a pigment holding portion, a hollow cavity (23) provided between two planes inside the spectrophotometer tool, and a pathway (22) leading to an inside of the hollow cavity (23) from an outside of the spectrophotometer tool, in which a substance forming at least one of the two planes having the hollow cavity (23) therebetween is transparent,
the pigment holding portion holding a predetermined amount of pigment that is soluble in the test object (3) and absorbs light with a wavelength other than a wavelength of light absorbed by an analyte in the test object (3).

10. A spectrophotometer tool (2) according to claim 9, wherein the analyte and the pigment are any one of the following combinations (a) to (f):
(a) the analyte includes nicotinamide adenine dinucleotide, nicotinamide adenine dinucleotide phosphate, p-nitrophenol, 5-amino-2-nitrobenzoic acid, or phosphomolybdic acid, and the pigment includes malachite green or Brilliant Blue FCF;
(b) the analyte includes biliverdin, and the pigment includes indocyanine green, malachite green, or Brilliant Blue FCF;
(c) the analyte includes a protein-copper ion complex, and the pigment includes indocyanine green;
(d) the analyte includes an o-cresolphthalein complexone-Ca ion complex or an o-cresolphthalein complexone-Mg ion complex, and the pigment includes Brilliant Blue FCF or indocyanine green;
(e) the analyte includes a condensation reaction product of 4-aminoantipyrine-Trinder's reagent, and the pigment includes Mordant Blue 29, phloxine B and phloxine BP, or Food Red No. 2; and
(f) the analyte includes albumin-bromocresol green, and the pigment includes indocyanine green or phloxine B.
